(19) **Europäisches Patentamt / European Patent Office / Office européen des brevets**

(11) **EP 3 175 958 B1**

(12) **EUROPEAN PATENT SPECIFICATION**

(45) Date of publication and mention of the grant of the patent:
**26.06.2019 Bulletin 2019/26**

(21) Application number: **14897492.6**

(22) Date of filing: **22.09.2014**

(51) Int Cl.:
**B25J 9/16** (2006.01)　　　**B25J 11/00** (2006.01)

(86) International application number:
**PCT/CN2014/087048**

(87) International publication number:
**WO 2016/008215 (21.01.2016 Gazette 2016/03)**

(54) **5-AXIS AND 6-AXIS MIXING CONTROL METHOD FOR INDUSTRIAL ROBOT AND SYSTEM THEREOF**

5-ACHSIGES UND 6-ACHSIGES MISCHSTEUERUNGSVERFAHREN FÜR EINEN INDUSTRIEROBOTER UND SYSTEM DAFÜR

PROCÉDÉ DE COMMANDE MÉLANGÉE À 5 AXES ET À 6 AXES POUR ROBOT INDUSTRIEL ET SYSTÈME ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.07.2014 CN 201410337702**

(43) Date of publication of application:
**07.06.2017 Bulletin 2017/23**

(73) Proprietor: **Kede Numerical Control Co., Ltd**
**Dalian, Liaoning 116600 (CN)**

(72) Inventors:
 • **YU, Dehai**
  **Dalian**
  **Liaoning 116600 (CN)**
 • **CHEN, Hu**
  **Dalian**
  **Liaoning 116600 (CN)**
 • **ZHOU, Guofeng**
  **Dalian**
  **Liaoning 116600 (CN)**
 • **LI, Yapeng**
  **Dalian**
  **Liaoning 116600 (CN)**
 • **CAI, Chungang**
  **Dalian**
  **Liaoning 116600 (CN)**
 • **WU, Fuhai**
  **Dalian**
  **Liaoning 116600 (CN)**
 • **YU, Benhong**
  **Dalian**
  **Liaoning 116600 (CN)**
 • **LI, Jingming**
  **Dalian**
  **Liaoning 116600 (CN)**
 • **JIANG, Long**
  **Dalian**
  **Liaoning 116600 (CN)**
 • **LIU, Tinggang**
  **Dalian**
  **Liaoning 116600 (CN)**
 • **XU, Gang**
  **Dalian**
  **Liaoning 116600 (CN)**

(74) Representative: **Proi World Intellectual Property GmbH**
**Obermattweg 12**
**6052 Hergiswil, Kanton Nidwalden (CH)**

(56) References cited:
**EP-A2- 1 602 456**　　　**CN-A- 103 029 123**
**JP-A- H11 179 682**

 • YOSHIMI B H ET AL: "ALIGNMENT USING AN UNCALIBRATED CAMERA SYSTEM", IEEE TRANSACTIONS ON ROBOTICS AND AUTOMATION, IEEE INC, NEW YORK, US, vol. 11, no. 4, 1 August 1995 (1995-08-01), pages 516-521, XP000592408, ISSN: 1042-296X, DOI: 10.1109/70.406936

**(Cont. next page)**

- RUSSAKOW J ET AL: "EXTENDED OPERATIONAL SPACE FORMULATION FOR SERIAL-TO-PARALLEL CHAIN(BRANCHING) MANIPULATORS", PROCEEDINGS OF THE INTERNATIONAL CONFERENCE ON ROBOTICS AND AUTOMATION. NAGOYA,JAPAN, MAY 21 - 27, 1995; [PROCEEDINGS OF THE INTERNATIONAL CONFERENCE ON ROBOTICS AND AUTOMATION], NEW YORK, IEEE, US, 21 May 1995 (1995-05-21), pages 1056-1061, XP000657300, DOI: 10.1109/ROBOT.1995.525421 ISBN: 978-0-7803-1966-0

- TOSHIO TSUJI ET AL: "Parallel and Distributed Trajectory Generation of Redundant Manipulators Through Cooperation and Competition Among Subsystems", IEEE TRANSACTIONS ON SYSTEMS, MAN AND CYBERNETICS. PART B:CYBERNETICS, IEEE SERVICE CENTER, PISCATAWAY, NJ, US, vol. 27, no. 3, 1 June 1997 (1997-06-01), XP011056598, ISSN: 1083-4419

## Description

### Technical Field

The present invention belongs to the field of industrial robot technology, and more particularly, to a kind of five-axis and six-axis mixing control method for industrial robot and a system thereof.

### Background Art

Industrial robot is multi-joint manipulator or multi-degree-of-freedom robot for the industrial field, is a kind of machine device automatically performing work, is a kind of machine realizing various functions by self-power and control capability, which cannot only be commanded by human, but also can be executed according to a pre-programmed procedure. Multi-channel control technology of numerical control system realizes that a controller independently controls a plurality of devices or different portions of one device in a relatively simple way, and provides a series of means and mechanisms to guarantee the logical relation of motion between objects.

A serial mechanism having six joint shafts and six degrees of freedom is generally adopted in the industrial robot in the prior art, effector is installed at the end of the sixth shaft, and a control system controls the motion of the end effector of the sixth shaft. As the robot is the serial mechanism, the rigidity thereof is weakened according to the increase in the number of shafts in series, and the rigidity of the end of the sixth shaft is the worst; therefore, if such industrial robot is applied in the field of material processing, the machining precision is very low under actions of a cutting force and a gravity of the effector, which is also a principal factor that restricts the serial industrial robot to be applied in the field of material processing.

The document XP000592408, entitled "Alignment using an uncalibrated camera system", discloses a multi-degree-of-freedom robot comprising an end-effector (gripper) with a camera mounted on said end-effector and rotating about the end-effector axis.

On the other hand, the document JP H11-179682 A discloses a multi-degree-of-freedom main manipulator with an auxiliary manipulator comprising several additional degrees of freedom mounted at the level of the fourth joint axis of said main manipulator, wherein said auxiliary manipulator can be folded up in parallel with one of the arms of the main manipulator. This document aims to a robot which can provide the functions of two separate robots when operating in reduced spaces in which two robots do not fit simultaneously. By mounting said auxiliary manipulator onto the main manipulator, the number of shafts is increased and the robot rigidity is consequently reduced.

### Summary of the Invention

Aiming at the proposing of the above problems, the present invention develops a five-axis and six-axis mixing control method for industrial robot and a system thereof.

The technical solutions of the present invention are as follows:

A five-axis and six-axis mixing control method for industrial robot, the industrial robot includs a first, a second, a third, a fourth, a fifth and a sixth joint shaft, and a plurality of rods; the rods are connected in series by the first, the second, the third, the fourth, the fifth and the sixth joint shaft; wherein the mixing control method includes the following steps of:

step 1: installing an end effector on each end of the fifth joint shaft and the sixth joint shaft; setting the first, the second, the third, the fourth and the fifth joint shaft, and the rods connected in series by the first, the second, the third, the fourth and the fifth joint shaft to form a five-axis robot, and simultaneously setting the first, the second, the third, the fourth, the fifth and the sixth joint shaft, and the rods connected in series by the first, the second, the third, the fourth, the fifth and the sixth joint shaft to form a six-axis robot;

step 2: configuring channels of the five-axis robot and the six-axis robot respectively, wherein the five-axis robot corresponding to a first channel, and the six-axis robot corresponding to a second channel;

step 3: obtaining respectively the motion target position of each joint shaft of the five-axis robot and the six-axis robot; and

step 4: according to the obtained motion target position of each joint shaft of the five-axis robot and six-axis robot, the first channel is implemented to control the movement of each joint shaft of the five-axis robot, and the second channel is implemented to control the movement of each joint shaft of the six-axis robot;

wherein each joint shaft of the five-axis robot and each joint shaft of the six-axis robot implements an independent motion according to the control of the first channel and the second channel in different time periods respectively.

Further, the step 3 specifically includes the following sub-steps of:

step 31: according to the size of each connecting rod of the industrial robot and current motion state of each joint shaft, a D-H parameter list is generated; the D-H parameter list comprises a rotation angle $\theta_i$ of the $i$th joint shaft, an axis distance $a_i$ between the $i$th joint shaft and the adjacent $(i - 1)$th joint shaft, a distance $d_i$ along an axis direction between the $i$th joint shaft and the $(i - 1)$th joint shaft, and an included angle $\alpha_i$ between an axis of the $i$th joint shaft and that of the adjacent $(i - 1)$th joint shaft, wherein $i$ is valued as 1, 2, ..., 6;

step 32: according to the D-H parameter list, a $i$th joint shaft transformation matrix

$$A_i = \begin{vmatrix} \cos\theta_i & -\sin\theta_i\cos\alpha_i & \sin\theta_i\sin\alpha_i & \alpha_i\cos\theta_i \\ \sin\theta_i & \cos\theta_i\cos\alpha_i & -\cos\theta_i\sin\alpha_i & \alpha_i \\ 0 & \sin\alpha_i & \cos\alpha_i & d_i \\ 0 & 0 & 0 & 1 \end{vmatrix}$$ is generated, wherein $\theta_i$ is a rotation angle of the $i$th joint shaft, $a_i$ is an axis distance between the $i$th joint shaft and the adjacent $(i - 1)$th joint shaft, $d_i$ is a distance between the $i$th joint shaft and the adjacent $(i - 1)$th joint shaft along an axis direction, and $\alpha_i$ is an included angle between an axis of the $i$th joint shaft and that of the adjacent $(i - 1)$th joint shaft, wherein $i$ is valued as 1,2, ..., 6;

step 33: according to the size of each of the end effectors installed on each end of the 5th joint shaft and the 6th joint shaft, a corresponding end effector transformation matrix $A_t$ is generated;

step 34: obtaining kinematics forward solutions of the five-axis robot and the six-axis robot through the $i$th joint shaft transformation matrix $A_i$ and the end effector transformation matrix $A_t$ respectively, wherein $i$ is valued as 1, 2, ..., 6; wherein, the kinematics forward solution $P_5$ of the five-axis robot is equal to $A_1 \times A_2 \times A_3 \times A_4 \times A_5 \times A_t$, and the kinematics forward solution $P_6$ of the six-axis robot is equal to $A_1 \times A_2 \times A_3 \times A_4 \times A_5 \times A_6 \times A_t$;

step 35: correspondingly obtaining kinematics inverse solution equations of the five-axis robot and the six-axis robot according to the kinematics forward solutions of the five-axis robot and the six-axis robot respectively, and obtaining respective kinematics inverse solution according to the kinematics inverse solution equations of the five-axis robot and the six-axis robot;

wherein, the kinematics inverse solution equation of the five-axis robot is

$$\begin{cases} A_1^{-1} \times P_5 \times A_t^{-1} = A_2 \times A_3 \times A_4 \times A_5 \\ A_3^{-1} \times A_2^{-1} \times A_1^{-1} \times P_5 \times A_t^{-1} = A_4 \times A_5 \end{cases}$$ ; and the kinematics inverse solution equation of the six-axis robot is $$\begin{cases} A_1^{-1} \times P_6 \times A_t^{-1} \times A_6^{-1} = A_2 \times A_3 \times A_4 \times A_5 \\ A_3^{-1} \times A_2^{-1} \times A_1^{-1} \times P_6 \times A_t^{-1} \times A_6^{-1} = A_4 \times A_5 \end{cases}$$ ; and

step 36: determining a respective unique solution from a plurality of kinematics inverse solutions of the five-axis robot and the six-axis robot respectively, wherein the unique solution corresponding to the five-axis robot is the motion target position of each joint shaft of the five-axis robot, and the unique solution corresponding to the six-axis robot is the motion target position of each joint shaft of the six-axis robot.

Further, before the step 3, there are setps as follows:
configuring an encoder and a data bus interface to each joint shaft of the industrial robot respectively; wherein the encoder is used for detecting the current motion state of each joint shaft and the current motion state is transmitted by the data bus interface;

Further:
the respective unique solution is determined from a plurality of kinematics inverse solutions of the five-axis robot and the six-axis robot by shortest path method respectively.

A five-axis and six-axis mixing control system for industrial robot, the industrial robot includes a first, a second, a third, a fourth, a fifth and a sixth joint shaft, and a plurality of rods; the rods are connected in series by the first, the second, the third, the fourth, the fifth and the sixth joint shaft; wherein an end effector is installed on each end of the fifth joint shaft and the sixth joint shaft; and the control system includes a first channel and a second channel which are communicated with each other:
both the first channel and the second channel include:

a channel configuration unit, used for configuring channels of a five-axis robot and a six-axis robot respectively, wherein the five-axis robot corresponding to the first channel, and the six-axis robot corresponding to the second channel; setting the first, the second, the third, the fourth and the fifth joint shaft, and the rods connected in series by the first, the second, the third, the fourth and the fifth joint shaft to form the five-axis robot, and simultaneously setting the first, the second, the third, the fourth, the fifth and the sixth joint shaft, and the rods connected in series by the first, the second, the third, the fourth, the fifth and the sixth joint shaft to form the six-axis robot;
a target position obtaining unit, used for obtaining respectively the motion target position of each joint shaft of the five-axis robot and the six-axis robot; and
a control unit, used for realizing the motion control of each joint shafts of the five-axis robot or realizing the motion control of each joint shaft of the six-axis robot according to the obtained motion target position of each joint shaft of the five-axis robot and the six-axis robot;

wherein each joint shaft of the five-axis robot and each joint shaft of the six-axis robot is adapted to implement an independent motion according to the control of the first channel and the second channel in different time periods respectively; and
wherein the first channel and the second channel are configured to control the five-axis robot and the six-axis robot respectively.

Further, the target position obtaining unit includes:

a D-H parameter list generating module, used for generating a D-H parameter list according to the sizes of each connecting rod of the industrial robot and the current motion state of each joint shaft, the D-H parameter list comprising a rotation angle $\theta_i$ of the $i^{th}$ joint shaft, an axis distance $a_i$ between the $i^{th}$ joint shaft and the adjacent $(i - 1)^{th}$ joint shaft, a distance $d_i$ along an axis direction between the $i^{th}$ joint shaft and the $(i - 1)^{th}$ joint shaft, and an included angle $\alpha_i$ between an axis of the $i^{th}$ joint shaft and that of the adjacent $(i - 1)^{th}$ joint shaft, wherein $i$ is valued as 1, 2, ..., 6;
a joint shaft transformation matrix generating module, used for generating a $i^{th}$ joint shaft transformation matrix

$$A_i = \begin{vmatrix} \cos\theta_i & -\sin\theta_i\cos\alpha_i & \sin\theta_i\sin\alpha_i & \alpha_i\cos\theta_i \\ \sin\theta_i & \cos\theta_i\cos\alpha_i & -\cos\theta_i\sin\alpha_i & \alpha_i \\ 0 & \sin\alpha_i & \cos\alpha_i & d_i \\ 0 & 0 & 0 & 1 \end{vmatrix}$$ according to the D-H parameter list, where-

in $\theta_i$ is a rotation angle of the $i^{th}$ joint shaft, $a_i$ is an axis distance between the $i^{th}$ joint shaft and the adjacent $(i - 1)^{th}$ joint shaft, $d_i$ is a distance between the $i^{th}$ joint shaft and the $(i - 1)^{th}$ joint shaft along an axis direction, and $\alpha_i$ is an included angle between an axis of the $i^{th}$ joint shaft and that of the adjacent $(i - 1)^{th}$ joint shaft, wherein $i$ is valued as 1, 2, ..., 6;
an end effector transformation matrix generating module, used for generating a corresponding end executor transformation matrix $A_t$ according to the size of each of the end effectors installed on each end of the $5^{th}$ joint shaft and the $6^{th}$ joint shaft; a kinematics forward solution obtaining module, used for obtaining kinematics forward solutions of the five-axis robot and the six-axis robot through the $i^{th}$ joint shaft transformation matrix $A_i$ and the end effector transformation matrix $A_t$ respectively, wherein $i$ is valued as 1, 2, ..., 6, wherein the kinematics forward solution $P_5$ of the five-axis robot is equal to $A_1 \times A_2 \times A_3 \times A_4 \times A_5 \times A_t$, and the kinematics forward solution $P_6$ of the six-axis robot is equal to $A_1 \times A_2 \times A_3 \times A_4 \times A_5 \times A_6 \times A_t$;
a kinematics inverse solution obtaining module, used for correspondingly obtaining kinematics inverse solution equations of the five-axis robot and the six-axis robot according to the kinematics forward solutions of the five-axis robot and the six-axis robot respectively, and obtaining respective kinematics inverse solution according to the kinematics inverse solution equations of the five-axis robot and the six-axis robot;
wherein, the kinematics inverse solution equation of the five-axis robot is
$$\begin{cases} A_1^{-1} \times P_5 \times A_t^{-1} = A_2 \times A_3 \times A_4 \times A_5 \\ A_3^{-1} \times A_2^{-1} \times A_1^{-1} \times P_5 \times A_t^{-1} = A_4 \times A_5 \end{cases}; \text{ and}$$
the kinematics inverse solution equation of the six-axis robot is
$$\begin{cases} A_1^{-1} \times P_6 \times A_t^{-1} \times A_6^{-1} = A_2 \times A_3 \times A_4 \times A_5 \\ A_3^{-1} \times A_2^{-1} \times A_1^{-1} \times P_6 \times A_t^{-1} \times A_6^{-1} = A_4 \times A_5 \end{cases}; \text{ and}$$
an unique solution determining module, used for determining a respective unique solution from a plurality of kinematics inverse solutions of the five-axis robot and the six-axis robot respectively, wherein the unique solution corresponding to the five-axis robot is the motion target position of each joint shaft of the five-axis robot, and the unique solution corresponding to the six-axis robot is the motion target position of each joint shaft of the six-axis robot;

Further, the end effector installed on the fifth joint shaft is electric spindle and loosing-clamping device, and the end executor installed on the sixth joint shaft is air operated fixture;

Further, the robot further also includes many encoders for detecting the current motion state of each joint shaft and data bus interfaces for connecting the encoders.

By adopting the above technical solutions, the five-axis and six-axis mixing control method for industrial robot and the system thereof provided by the present invention can further utilize the five-axis robot to machine materials through the five-axis and six-axis mixing control, which decreases mechanical connection flexibility and reduces the vibration in the material processing process; performing workpiece transport by means of the six-axis robot, which keeps the operation flexible, effectively combines the five-axis and six-axis control, and improves the integral rigidity and processing precision of the industrial robot.

**Brief Description of the Drawings**

Fig. 1 is a flow diagram of a mixing control method of the present invention;
Fig. 2 is a flow diagram of step 3 of the present invention;
Fig. 3 is a structure diagram of a control system of the present invention;
Fig. 4 is a structure diagram of an industrial robot of the present invention;
Fig. 5 is a schematic diagram of position and data flow direction of the mixing control method in a numerical control system of the present invention;
Fig. 6 is a schematic diagram of size of each connecting rod of a robot of the present invention; and
Fig. 7 is a schematic diagram of a coordinate system of each joint shaft of the present invention;

In these figures: 1 refers to electric spindle, and 2 refers to air operated fixture.

**Detailed Description of the Preferred Embodiments**

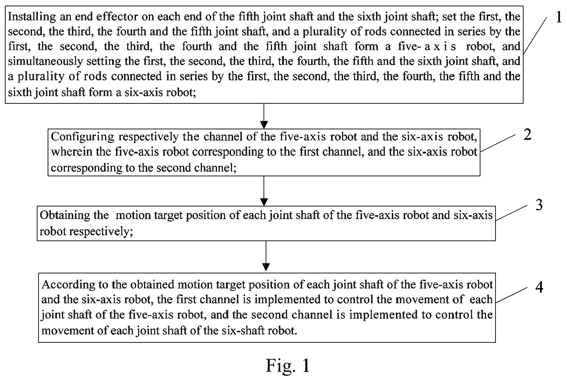

Fig. 1 refers to a five-axis and six-axis mixing control method for industrial robot, the industrial robot includes a first, a second, a third, a fourth, a fifth and a sixth joint shaft, and a plurality of rods; the rods are connected in series by the first, the second, the third, the fourth, the fifth and the sixth joint shaft; wherein the mixing control method includes the following steps of:

step 1: installing an end effector on each end of the fifth joint shaft and the sixth joint shaft; setting the first, the second, the third, the fourth and the fifth joint shaft, and the rods connected in series by the first, the second, the third, the fourth and the fifth joint shaft to form a five-axis robot, and simultaneously setting the first, the second, the third, the fourth, the fifth and the sixth joint shaft, and the rods connected in series by the first, the second, the third, the fourth, the fifth and the sixth joint shaft to form a six-axis robot;
step 2: configuring channels of the five-axis robot and the six-axis robot respectively, wherein the five-axis robot corresponding to a first channel, and the six-axis robot corresponding to a second channel;
step 3: obtaining respectively the motion target position of each joint shaft of the five-axis robot and the six-axis robot; and
step 4: according to the obtained motion target position of each joint shaft of the five-axis robot and six-axis robot, the first channel is implemented to control the movement of each joint shaft of the five-axis robot, and the second channel is implemented to control the movement of each joint shaft of the six-axis robot and the six-axis robot.

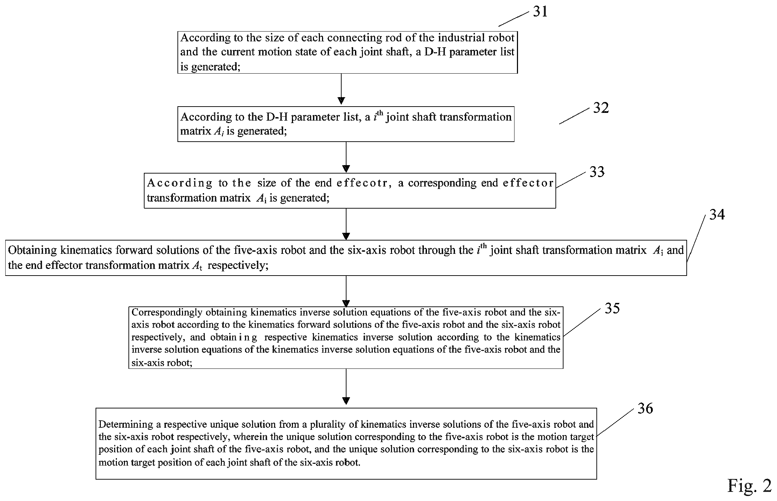

Further as shown in Fig. 2, the step 3 specifically includes the following sub-steps of:

step 31: according to the size of each connecting rod of the industrial robot and the current motion state of each joint shaft, a D-H parameter list is generated; the D-H parameter list comprises a rotation angle $\theta_i$ of the $i^{th}$ joint shaft, an axis distance $a_i$ between the $i^{th}$ joint shaft and the adjacent $(i - 1)^{th}$ joint shaft, a distance $d_i$ between the $i^{th}$ joint shaft and the $(i - 1)^{th}$ joint shaft along an axis direction, and an included angle $\alpha_i$ between an axis of the $i^{th}$ joint shaft and that of the adjacent $(i - 1)^{th}$ joint shaft, wherein $i$ is valued as 1, 2, ..., 6;

step 32: according to the D-H parameter list, a $i^{th}$ joint shaft transformation matrix

$$A_i = \begin{vmatrix} \cos\theta_i & -\sin\theta_i\cos\alpha_i & \sin\theta_i\sin\alpha_i & \alpha_i\cos\theta_i \\ \sin\theta_i & \cos\theta_i\cos\alpha_i & -\cos\theta_i\sin\alpha_i & \alpha_i \\ 0 & \sin\alpha_i & \cos\alpha_i & d_i \\ 0 & 0 & 0 & 1 \end{vmatrix}$$ is generated, wherein $\theta_i$ is a rotation angle of the $i^{th}$ joint shaft, $a_i$ is an axis distance between the $i^{th}$ joint shaft and the adjacent $(i-1)^{th}$ joint shaft, $d_i$ is a distance between the $i^{th}$ joint shaft and the $(i-1)^{th}$ joint shaft along an axis direction, and $\alpha_i$ is an included angle between an axis of the $i^{th}$ joint shaft and that of the adjacent $(i-1)^{th}$ joint shaft, wherein $i$ is valued as 1, 2, ..., 6;

step 33: according to a size of the end effector, a corresponding end effector transformation matrix $A_t$ is generated;

step 34: obtaining kinematics forward solutions of the five-axis robot and the six-axis robot through the $i^{th}$ joint shaft transformation matrix $A_i$ and the end effector transformation matrix $A_t$ respectively, wherein $i$ is valued as 1, 2, ..., 6; wherein, the kinematics forward solution $P_5$ of the five-axis robot is equal to $A_1 \times A_2 \times A_3 \times A_4 \times A_5 \times A_t$, and the kinematics forward solution $P_6$ of the six-axis robot is equal to $A_1 \times A_2 \times A_3 \times A_4 \times A_5 \times A_6 \times A_t$;

step 35: correspondingly obtaining kinematics inverse solution equations of the five-axis robot and the six-axis robot according to the kinematics forward solutions of the five-axis robot and the six-axis robot respectively, and obtaining respective kinematics inverse solution according to the kinematics inverse solution equations of the five-axis robot and the six-axis robot;

wherein, the kinematics inverse solution equation of the five-axis robot is
$$\begin{cases} A_1^{-1} \times P_5 \times A_t^{-1} = A_2 \times A_3 \times A_4 \times A_5 \\ A_3^{-1} \times A_2^{-1} \times A_1^{-1} \times P_5 \times A_t^{-1} = A_4 \times A_5 \end{cases}$$; and the kinematics inverse solution equation of the six-axis

robot is $$\begin{cases} A_1^{-1} \times P_6 \times A_t^{-1} \times A_6^{-1} = A_2 \times A_3 \times A_4 \times A_5 \\ A_3^{-1} \times A_2^{-1} \times A_1^{-1} \times P_6 \times A_t^{-1} \times A_6^{-1} = A_4 \times A_5 \end{cases}$$; and

step 36: determining a respective unique solution from a plurality of kinematics inverse solutions of the five-axis robot and the six-axis robot respectively, wherein the unique solution corresponding to the five-axis robot is the motion target position of each joint shaft of the five-axis robot, and the unique solution corresponding to the six-axis robot is the motion target position of each joint shaft of the six-axis robot;

Further, before the step 3, there are steps as follows: configuring encoder and data bus interface to each joint shaft of the industrial robot respectively; wherein the encoder is used for detecting the current motion state of each joint shaft, and the current motion state is transmitted by the data bus interface; further, each joint shaft of of the five-axis robot and each joint shaft of the six-axis robot is implemented the independent motion according to the control of the first channel and the second channel in different time periods respectively; further, the respective unique solution is determined from the plurality of kinematics inverse solutions of the five-axis robot and the six-axis robot by shortest path method respectively.

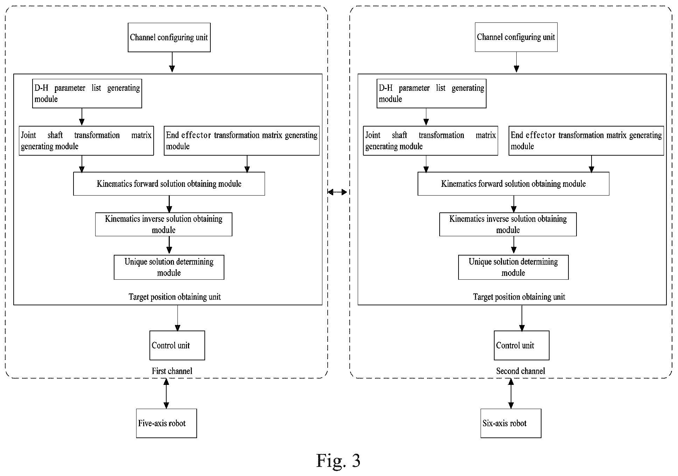

As shown in Fig. 3, a five-axis and six-axis mixing control system for industrial robot, the industrial robot includes a first, a second, a third, a fourth, a fifth and a sixth joint shaft, and a plurality of rods; the rods are connected in series by the first, the second, the third, the fourth, the fifth and the sixth joint shaft; whereing an end effector is installed on each end of the fifth joint shaft and the sixth joint shaft; and the control system includes a first channel and a second channel which are communicated with each other: both the first channel and the second channel include: a channel configuration unit, used for configuring channels of a five-axis robot and a six-axis robot respectively, wherein the five-axis robot corresponding to the first channel, and the six-axis robot corresponding to the second channel; setting the first, the second, the third, the fourth and the fifth joint shaft, and the rods connected in series by the first, the second, the third, the fourth and the fifth joint shaft to form the five-axis robot, and simultaneously setting the first, the second, the third, the fourth, the fifth and the sixth joint shaft, and the rods connected in series by the first, the second, the third, the fourth, the fifth and the sixth joint shaft to form the six-axis robot; a target position obtaining unit, used for obtaining the motion target position of each joint shaft of the five-axis robot and the six-axis robot respectively; and a control unit, used for according to the obtained motion target position of each joint shaft of the five-axis robot and the six-axis robot, realizing the motion control of each joint shaft of the five-axis robot, or realizing the motion control of each joint shaft of the six-axis robot; further, the target position obtaining unit includeds: a D-H parameter list generating module, used for generating a D-H parameter list according to size of each connecting rod of the industrial robot and the current motion state of each joint shaft, the D-H parameter list comprising a rotation angle $\theta_i$ of the $i^{th}$ joint shaft, an axis distance $a_i$

between the $i^{th}$ joint shaft and the adjacent $(i - 1)^{th}$ joint shaft, a distance $d_i$ between the $i^{th}$ joint shaft and the $(i - 1)^{th}$ joint shaft along an axis direction, and an included angle $\alpha_i$ between an axis of the $i^{th}$ joint shaft and that of the adjacent $(i - 1)^{th}$ joint shaft, wherein $i$ is valued as 1, 2, ..., 6; a joint shaft transformation matrix generating module, used for generating a $i^{th}$ joint shaft transformation matrix $A_i = \begin{vmatrix} \cos\theta_i & -\sin\theta_i\cos\alpha_i & \sin\theta_i\sin\alpha_i & \alpha_i\cos\theta_i \\ \sin\theta_i & \cos\theta_i\cos\alpha_i & -\cos\theta_i\sin\alpha_i & \alpha_i \\ 0 & \sin\alpha_i & \cos\alpha_i & d_i \\ 0 & 0 & 0 & 1 \end{vmatrix}$

according to the D-H parameter list, wherein $\theta_i$ is a rotation angle of the $i^{th}$ joint shaft, $a_i$ is an axis distance between the $i^{th}$ joint shaft and the adjacent $(i - 1)^{th}$ joint shaft, $d_i$ is a distance between the $i^{th}$ joint shaft and the $(i - 1)^{th}$ joint shaft along an axis direction, and an included angle $\alpha_i$ between an axis of the $i^{th}$ joint shaft and that of the adjacent $(i - 1)^{th}$ joint shaft, wherein $i$ is valued as 1, 2, ..., 6; an end effector transformation matrix generating module, used for generating a corresponding end executor transformation matrix $A_t$ according to a size of the end effector; a kinematics forward solution obtaining module, used for obtaining kinematics forward solutions of the five-axis robot and the six-axis robot through the $i^{th}$ joint shaft transformation matrix $A_i$ and the end effector transformation matrix $A_t$ respectively, wherein $i$ is valued as 1, 2, ..., 6, wherein the kinematics forward solution $P_5$ of the five-axis robot is equal to $A_1 \times A_2 \times A_3 \times A_4 \times A_5 \times A_t$, and the kinematics forward solution $P_6$ of the six-axis robot is equal to $A_1 \times A_2 \times A_3 \times A_4 \times A_5 \times A_6 \times A_t$; a kinematics inverse solution obtaining module, used for correspondingly obtaining kinematics inverse solution equations of the five-axis robot and the six-axis robot according to the kinematics forward solutions of the five-axis robot and the six-axis robot respectively, and obtaining respective kinematics inverse solution according to the kinematics inverse solution equations of the five-axis robot and the six-axis robot; wherein, the kinematics inverse solution equation of the five-axis robot is $\begin{cases} A_1^{-1} \times P_5 \times A_t^{-1} = A_2 \times A_3 \times A_4 \times A_5 \\ A_3^{-1} \times A_2^{-1} \times A_1^{-1} \times P_5 \times A_t^{-1} = A_4 \times A_5 \end{cases}$ ; and, the kinematics inverse solution equation of the six-axis robot is $\begin{cases} A_1^{-1} \times P_6 \times A_t^{-1} \times A_6^{-1} = A_2 \times A_3 \times A_4 \times A_5 \\ A_3^{-1} \times A_2^{-1} \times A_1^{-1} \times P_6 \times A_t^{-1} \times A_6^{-1} = A_4 \times A_5 \end{cases}$ ; and an unique solution determining module, used for determining a respective unique solution from a plurality of kinematics inverse solutions of the five-axis robot and the six-axis robot respectively, wherein the unique solution corresponding to the five-axis robot is the motion target position of each joint shaft of the five-axis robot, and the unique solution corresponding to the six-axis robot is the motion target position of each joint shaft of the six-axis robot; Further, the end effector installed on the fifth joint shaft is an electric spindle and a loosing-clamping device, and the end effector installed on the sixth joint shaft is an air operated fixture; and Further, the robot further includes many encoders for detecting the current motion state of each joint shaft and data bus interfaces for connecting the encoders.

The step 2 of the present invention specifically is as follows: establishing correspondence between Cartesian coordinate system logic axis (X, Y, Z, A, B, C) of the first channel and each joint shaft of the five-axis robot, further establishing correspondence between logic spindle S and tool magazine shaft MAG as well as correspondence between the electric spindle and the tool magazine shaft when the end effector installed on the fifth joint shaft is electric spindle 1 and loosing-clamping device; establishing correspondence between Cartesian coordinate system logic axis (X, Y, Z, A, B, C) of the second channel and each joint shaft of the six-axis robot; in addition, further includes configuring an encoder and a data bus interface to each joint shaft of the industrial robot respectively, and further configuring the encoder and the data bus interface to the electric spindle and the tool magazine shaft in the meanwhile when the end effector installed on the fifth joint shaft is the electric spindle 1 and the loosing-clamping device; configuring the encoder to each joint shaft, and binding a mapping address in encoder configuration item as the data bus interface in the meanwhile. Each shaft in the first channel are defined as follows: S indicates the electric spindle, MAG indicates the tool magazine shaft, X, Y, Z, A, B and C indicate logic axes of the robot; and each shaft in the second channel are defined as follows: X, Y, Z, A, B and C indicate logic axes of the robot.

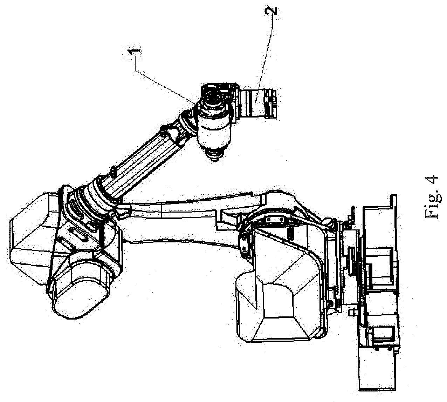

Fig. 4 shows the structure schematic diagram of the industrial robot of the present invention. When the present invention is applied to the field of material processing, as shown in Fig. 4, the end effector installed on the fifth joint shaft can be the electric spindle 1 and the loosing-clamping device for processing the materials; and the end effector installed on the sixth joint shaft can be the air operated fixture 2 for carrying auxiliary materials.

The present invention sets the first, the second, the third, the fourth and the fifth joint shaft, and the rods connected in series by the first, the second, the third, the fourth and the fifth joint shaft to form five-axis robot, and simultaneously sets the first, the second, the third, the fourth, the fifth and the sixth joint shaft, and the rods connected in series by the first, the second, the third, the fourth, the fifth and the sixth joint shaft to form six-axis robot, and then configures a channel object respectively to the control of the five-axis robot and that of the six-axis robot by adopting a multi-channel control technology, thus forming a dual-channel control mode. The first channel and the second channel are relatively independent from each other logically, but control the same one industrial robot physically. Both of the two channels can be communicated with each other, so as to finish a dual-channel control task. The working processes of the first channel and the second channel are specifically as follows:

the first channel and the second channel get ready;
the first channel controls the end effector, such as fixture, to carry the workpiece to be processed to processing position, sends workpiece in-position signal to the second channel, and waits for a reply signal meanwhile;
the second channel selects tool and processes the workpiece according to a workpiece processing procedure after obtaining the workpiece in-position signal; sends completing processing signal to the first channel after completing processing the workpiece, and waits for a reply signal meanwhile;
after the first channel obtains the completing processing signal, the workpiece is taken down from the processing position and put in a finished product position; and
turn to step 2 for looping execution until all workpieces to be processed are completely processed, then the working process is finished.

Meanwhile, each joint shaft of the five-axis robot and each joint shaft of the six-axis robot is respectively implemented the independent motion according to the control of the first channel and the second channel in different time periods. Writting user programs for the five-axis robot and the six-axis robot respectively before step, wherein the user programs include motion trail setting of each joint shaft of the five-axis robot and the six-axis robot and synchronizing signal of the first channel and the second channel.

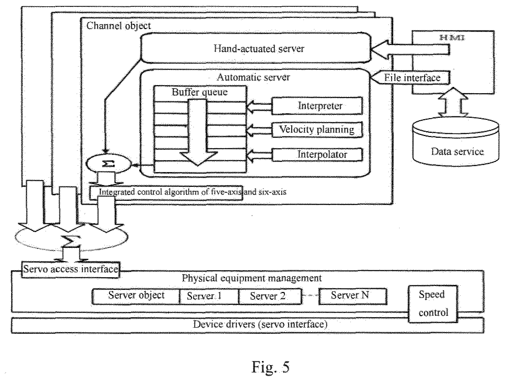

In addition, the first channel and the second channel of the present invention can select the control of the five-axis robot or the control of the six-axis robot. Fig. 5 shows a schematic diagram of position and data flow direction of the mixing control method in a numerical control system of the present invention. As shown in Fig. 5, each channel object is integrated with five-axis control method and six-axis control method simultaneously.

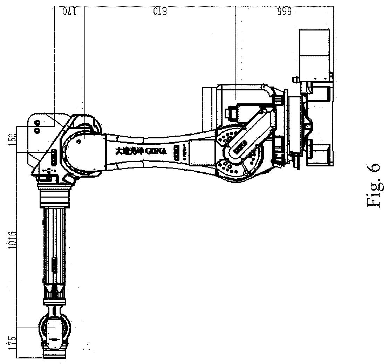

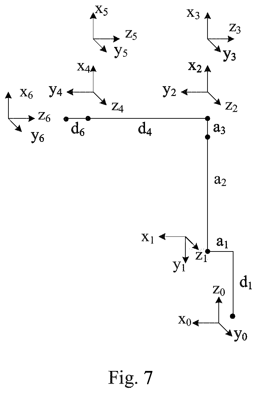

Fig. 6 shows a schematic diagram of size of each rods of a robot of the present invention; and Fig. 7 shows a schematic diagram of a coordinate system of each joint shaft of the present invention. The D-H parameter list is as shown in Table 1, the D-H parameter list comprises: a rotation angle $\theta_i$ of the $i$th joint shaft, namely an angle rotated by the $i$th joint shaft coordinate system relative to the $(i-1)$th joint shaft coordinate system around Z-axis; an axis distance $a_i$ between the $i$th joint shaft and the adjacent next joint shaft; a distance $d_i$ between the $i$th joint shaft and the end effector respectively, namely a value of an origin of the $i$th joint shaft coordinate system along the direction of the Z-axis of the $(i-1)$th joint shaft coordinate system; and an included angle $\alpha_i$ between an axis of the $i$th joint shaft and the axis of the adjacent next joint shaft, namely an angle rotated by the $i$th joint shaft coordinate system relative to the $(i-1)$th joint shaft coordinate system around X-axis, wherein $i$ is valued as 1, 2, ..., 6, wherein $d_2$, $d_3$ and $d_5$ are valued as 0, $a_4 \sim a_6$ are valued as 0, $\alpha_2$ and $\alpha_6$ are valued as 0, $d_1$ corresponds to connecting rod size 565, $d_4$ corresponds to connecting rod size 1016 and is valued as -1016 (since the origin of the sixth joint shaft coordinate system along the negative direction of the Z-axis in the fifth joint shaft coordinate system), $d_6$ corresponds to connecting rod size 175 and is valued as -175 (since the origin of the sixth joint shaft coordinate system along the negative direction of the Z-axis in the fifth joint shaft coordinate system), $a_1 \sim a_3$ correspond to the connecting rod sizes 150, 870 and 170 respectively; the size of each connecting rod of the industrial robot are known design parameters of the industrial robot, the rotation angle $\theta_i$ of the $i$th joint shaft is obtained according to the current motion state of each joint shaft which measured by the encoder; $\alpha_1 = -90°$, $\alpha_3 = 90°$, $\alpha_4 = -90°$ and $\alpha_5 = 90°$; in addition, the size of the end effector is an offset size of the end effector relative to the end joint shaft of the industrial robot, and the parameter form can be formed by 6 real number values.

Table 1. D-H parameter list

| the $i$th shaft | $\theta$ | d | a | $\alpha$ |
|---|---|---|---|---|
| 1 | $\theta_1$ | $d_1$ | $a_1$ | $\alpha_1$ |
| 2 | $\theta_2$ | 0 | $a_2$ | 0 |
| 3 | $\theta_3$ | 0 | $a_3$ | $\alpha_3$ |
| 4 | $\theta_4$ | $d_4$ | 0 | $\alpha_4$ |
| 5 | $\theta_5$ | 0 | 0 | $\alpha_5$ |

(continued)

| the i$^{th}$ shaft | $\theta$ | d | a | $\alpha$ |
|---|---|---|---|---|
| 6 | $\theta_6$ | $d_6$ | 0 | 0 |

A respective unique solution is determined from a plurality of kinematics inverse solutions of the five-axis robot and the six-axis robot by shortest path method respectively in the present invention, and thus obtaining the motion target position of each joint shaft of the five-axis robot and the six-axis robot. The motion target position corresponds to the corresponding position when the end of the industrial robot reaching a designated position and a designated posture. At most 8 kinematics inverse solutions can be obtained for the position to be reached by each end of the robot, each inverse solution corresponds to a vector $V_n(\theta_{n1},\theta_{n2},\theta_{n3},\theta_{n4},\theta_{n5},\theta_{n6})$ formed by six joint values of the industrial robot, wherein $n$ is valued as 1,2, ..., 8, a component $\theta_{ni}$ corresponds to the motion target position of the $i^{th}$ joint shaft, wherein $i$ is valued as 1, 2, ..., 6; it is assumed that the current six joints' vector of the industrial robot is $V_c$, the $V_c$ is composed of $(\theta_{c1},\theta_{c2},\theta_{c3},\theta_c,\theta_{c5},\theta_{c6})$, wherein a component $\theta_{ci}$ corresponds to the current position of the $i^{th}$ joint shaft, wherein $i$ is valued as 1, 2, ..., 6.

According to the increment value of the target position and the current position of each joint shaft, namely $\Delta V = V_n - V_c = (\theta_{n1} - \theta_{c1},\theta_{n2} - \theta_{c2},\theta_{n3} - \theta_{c3},\theta_{n4} - \theta_{c4},\theta_{n5} - \theta_{c5},\theta_{n6} - \theta_{c6})$, further, $R_n = |\theta_{n1} - \theta_{c1}|+|\theta_{n2} - \theta_{c2}|+|\theta_{n3} - \theta_{c3}|+|\theta_{n4} - \theta_{c4}|+|\theta_{n5} - \theta_{c5}|+|\theta_{n6} - \theta_{c6}|$ is determined respectively, namely $R_n$ is a sum of absolute values of increment values, wherein $n$ is valued as 1, 2, ..., 8, and thus taking the kinematics inverse solution corresponding to $R = \min(R_1,R_2,R_3,R_4,R_5,R_6,R_7,R_8)$ as the unique solution. A value having a smallest ordinal number is selected as $V_n$ if there are many minimum values in $R_1 \sim R_8$;

In addition, the calculation of the shortest path method can be performed with reference to weight of each joint shaft. If a weight $w_i$ is distributed for each joint shaft, $0 < w_i \le 1$, then $R_n = w_1 \times |\theta_{n1} - \theta_{c1}|+w_2 \times |\theta_{n2} - \theta_{c2}|+w_3 \times |\theta_{n3} - \theta_{c3}|+w_4 \times |\theta_{n4} - \theta_{c4}|+w_5 \times |\theta_{n5} - \theta_{c5}|+w_6 \times |\theta_{n6} - \theta_{c6}|$; both the first channel and the second channel comprise a unique solution determining module, and the respective unique solution of the five-axis robot and the six-axis robot is determined by the unique solution determining module from a plurality of kinematics inverse solutions by the shortest path method respectively.

The present invention provides a five-axis and six-axis mixing control method for industrial robot and a system thereof, through the five-axis and six-axis mixing control,, the five-axis robot can be used to process the material, with reducing the flexibility of mechanical connection, reducing the vibration in the material processing process, performing workpiece transport by neans of the six-axia robot, and maintaining the flexibility of operation. The present invention effectively combines the five-axis' and six-axis' control, and improves the integral rigidity and processing precision of the industrial robot, and more complicated task can be finished by adopting the multi-channel control technology. In addition, each channel of the present invention can be configured with a plurality of shafts, for example, one channel can be configured with auxiliary shafts of the electric spindle and servo tool magazine shaft, etc.; so the industrial robot, the electric spindle, the tool loosing-clamping device, the servo tool magazine and the air operated fixture are combined into an integrated material processing system.

The above description is preferred detailed embodiment of the present invention merely without limiting the protection scope of the present invention in any way. Those person skilled in the art can make equivalent replacements or changes to the present invention, which according to the technical solutions and inventive concepts within the disclosed technical scope of the present invention, shall fall into the protection scope of the present invention as defined in the appended claims.

**Claims**

1. A five-axis and six-axis mixing control method for industrial robot, the industrial robot includes a first, a second, a third, a fourth, a fifth and a sixth joint shaft, and a plurality of rods; the rods are connected in series by the first, the second, the third, the fourth, the fifth and the sixth joint shaft; wherein the mixing control method includes the following steps:

   step 1: installing an end effector (1, 2) on each end of the fifth joint shaft and the sixth joint shaft; setting the first, the second, the third, the fourth and the fifth joint shaft, and the rods connected in series by the first, the second, the third, the fourth and the fifth joint shaft to form a five-axis robot, and simultaneously setting the first, the second, the third, the fourth, the fifth and the sixth joint shaft, and the rods connected in series by the first, the second, the third, the fourth, the fifth and the sixth joint shaft to form a six-axis robot;
   step 2: configuring channels of the five-axis robot and the six-axis robot respectively, wherein the five-axis robot corresponding to a first channel, and the six-axis robot corresponding to a second channel;

step 3: obtaining respectively the motion target position of each joint shaft of the five-axis robot and six-axis robot; and
step 4: according to the obtained motion target position of each joint shaft of the five-axis robot and six-axis robot, the first channel is implemented to control the movement of each joint shaft of the five-axis robot, and the second channel is implemented to control the movement of each joint shaft of the six-axis robot;

wherein each joint shaft of the five-axis robot and each joint shaft of the six-axis robot implements an independent motion according to the control of the first channel and the second channel in different time periods respectively.

2. The five-axis and six-axis mixing control method for industrial robot according to claim 1, wherein the step 3 specifically includes the following steps:

step 31: according to the size of each connecting rod of the industrial robot and the current motion state of each joint shaft, a D-H parameter list is generated; the D-H parameter list comprises a rotation angle $\theta_i$ of the $i^{th}$ joint shaft, an axis distance $a_i$ between the $i^{th}$ joint shaft and the adjacent $(i - 1)^{th}$ joint shaft, a distance $d_i$ along an axis direction between the $i^{th}$ joint shaft and the $(i - 1)^{th}$ joint shaft, and an included angle $\alpha_i$ between the $i^{th}$ joint shaft's axis and the adjacent $(i - 1)^{th}$ joint shaft's axis, the included angle being an angle rotated by the $i^{th}$ joint shaft coordinate system relative to the $(i - 1)^{th}$ joint shaft coordinate system around X-axis, wherein $i^{th}$ is valued as 1, 2, ..., 6;

step 32: according to the D-H parameter list, a $i^{th}$ joint shaft transformation matrix

$$A_i = \begin{vmatrix} \cos\theta_i & -\sin\theta_i\cos\alpha_i & \sin\theta_i\sin\alpha_i & \alpha_i\cos\theta_i \\ \sin\theta_i & \cos\theta_i\cos\alpha_i & -\cos\theta_i\sin\alpha_i & \alpha_i \\ 0 & \sin\alpha_i & \cos\alpha_i & d_i \\ 0 & 0 & 0 & 1 \end{vmatrix}$$

is generated, wherein $\theta_i$ is a rotation angle of the $i^{th}$ joint shaft, $a_i$ is an axis distance between the $i^{th}$ joint shaft and the adjacent $(i - 1)^{th}$ joint shaft, $d_i$ is a distance between the $i^{th}$ joint shaft and the adjacent $(i - 1)^{th}$ joint shaft along an axis direction, and $\alpha_i$ is an included angle between an axis of the $i^{th}$ joint shaft and that of the adjacent $(i - 1)^{th}$ joint shaft, wherein $i$ is valued as 1, 2, ..., 6;

step 33: according to the size of each of the end effectors installed on each end of the $5^{th}$ joint shaft and the $6^{th}$ joint shaft, a corresponding end effector transformation matrix $A_t$ is generated;

step 34: obtaining kinematics forward solutions of the five-axis robot and the six-axis robot through the $i^{th}$ joint shaft transformation matrix $A_i$ and the end effector transformation matrix $A_t$ respectively, wherein $i$ is valued as 1, 2, ..., 6;
wherein, the kinematics forward solution $P_5$ of the five-axis robot is equal to $A_1 \times A_2 \times A_3 \times A_4 \times A_5 \times A_t$, and the kinematics forward solution $P_6$ of the six-axis robot is equal to $A_1 \times A_2 \times A_3 \times A_4 \times A_5 \times A_6 \times A_t$;

step 35: correspondingly obtaining kinematics inverse solution equations of the five-axis robot and the six-axis robot according to the kinematics forward solutions of the five-axis robot and the six-axis robot respectively, and obtaining respective kinematics inverse solution according to the kinematics inverse solution equations of the five-axis robot and the six-axis robot;
wherein, the kinematics inverse solution equation of the five-axis robot is

$$\begin{cases} A_1^{-1} \times P_5 \times A_t^{-1} = A_2 \times A_3 \times A_4 \times A_5 \\ A_3^{-1} \times A_2^{-1} \times A_1^{-1} \times P_5 \times A_t^{-1} = A_4 \times A_5 \end{cases}$$ ; and the kinematics inverse solution equation of the six-axis robot is $$\begin{cases} A_1^{-1} \times P_6 \times A_t^{-1} \times A_6^{-1} = A_2 \times A_3 \times A_4 \times A_5 \\ A_3^{-1} \times A_2^{-1} \times A_1^{-1} \times P_6 \times A_t^{-1} \times A_6^{-1} = A_4 \times A_5 \end{cases}$$ ; and

step 36: determining a respective unique solution from a plurality of kinematics inverse solutions of the five-axis robot and the six-axis robot respectively, wherein the unique solution corresponding to the five-axis robot is the motion target position of each joint shaft of the five-axis robot, and the unique solution corresponding to the six-axis robot is the motion target position of each joint shaft of the six-axis robot.

3. The five-axis and six-axis mixing control method for industrial robot according to claim 2, wherein before step 3, there are steps as follows:
configuring an encoder and a data bus interface to each joint shaft of the industrial robot respectively; wherein the encoder is used for detecting the current motion state of each joint shaft and the current motion state is transmitted by the data bus interface.

4. The five-axis and six-axis mixing control method for industrial robot according to claim 2, wherein:
the respective unique solution is determined from a plurality of kinematics inverse solutions of the five-axis robot and the six-axis robot by shortest path method respectively.

5. A five-axis and six-axis mixing control system for industrial robot, the industrial robot includes a first, a second, a third, a fourth, a fifth and a sixth joint shaft, and a plurality of rods; the rods are connected in series by the first, the second, the third, the fourth, the fifth and the sixth joint shaft; wherein an end effector (1, 2) is installed on each end of the fifth joint shaft and the sixth joint shaft; and the control system includes a first channel and a second channel which are communicated with each other:
both the first channel and the second channel include:

a channel configuration unit, used for configuring channels of a five-axis robot and a six-axis robot respectively, wherein the five-axis robot corresponding to the first channel, and the six-axis robot corresponding to the second channel; setting the first, the second, the third, the fourth and the fifth joint shaft, and the rods connected in series by the first, the second, the third, the fourth and the fifth joint shaft to form the five-axis robot, and simultaneously setting the first, the second, the third, the fourth, the fifth and the sixth joint shaft, and the rods connected in series by the first, the second, the third, the fourth, the fifth and the sixth joint shaft to form the six-axis robot;
a target position obtaining unit, used for obtaining respectively the motion target position of each joint shaft of the five-axis robot and the six-axis robot; and
a control unit, used for according to the obtained motion target position of each joint shaft of the five-axis robot and six-axis robot, realizing the motion control of each joint shaft of the five-axis robot, or realizing the motion control of each joint shaft of the six-axis robot;
wherein each joint shaft of the five-axis robot and each joint shaft of the six-axis robot is adapted to implement an independent motion according to the control of the first channel and the second channel in different time periods respectively; and
wherein the first channel and the second channel are configured to control the five-axis robot and the six-axis robot respectively.

6. The five-axis and six-axis mixing control system for industrial robot according to claim 5, wherein the target position obtaining unit comprises:

a D-H parameter list generating module, used for generating a D-H parameter list according to the size of each connecting rod of the industrial robot and the current motion state of each joint shaft, the D-H parameter list comprising a rotation angle $\theta_i$ of the $i$th joint shaft, an axis distance $a_i$ between the $i$th joint shaft and the adjacent $(i - 1)$th joint shaft, a distance $d_i$ along an axis direction between the $i$th joint shaft and the $(i - 1)$th joint shaft, and an included angle $\alpha_i$ between an axis of the $i$th joint shaft and that of the adjacent $(i - 1)$th joint shaft, the included angle being an angle rotated by the $i$th joint shaft coordinate system relative to the $(i - 1)$th joint shaft coordinate system around X-axis, wherein $i$ is valued as 1, 2, ..., 6;
a joint shaft transformation matrix generating module, used for generating a $i$th joint shaft transformation matrix

$$A_i = \begin{vmatrix} \cos\theta_i & -\sin\theta_i\cos\alpha_i & \sin\theta_i\sin\alpha_i & \alpha_i\cos\theta_i \\ \sin\theta_i & \cos\theta_i\cos\alpha_i & -\cos\theta_i\sin\alpha_i & \alpha_i \\ 0 & \sin\alpha_i & \cos\alpha_i & d_i \\ 0 & 0 & 0 & 1 \end{vmatrix}$$ according to the D-H parameter list,

wherein $\theta_i$ is a rotation angle of the $i$th joint shaft, $a_i$ is an axis distance between the $i$th joint shaft and the adjacent $(i - 1)$th joint shaft, $d_i$ is a distance between the $i$th joint shaft and the adjacent $(i - 1)$th joint shaft along an axis direction, and $\alpha_i$ is an included angle between an axis of the $i$th joint shaft and that of the adjacent $(i - 1)$th joint shaft, wherein $i$th is valued as 1, 2, ..., 6;
an end effector transformation matrix generating module, used for generating a corresponding end effector transformation matrix $A_t$ according to the size of each of the end effectors installed on each end of the 5th joint shaft and the 6th joint shaft;

a kinematics forward solution obtaining module, used for obtaining kinematics forward solutions of the five-axis robot and the six-axis robot through the $i^{th}$ joint shaft transformation matrix $A_i$ and the end effector transformation matrix $A_t$ respectively, wherein $i$ is valued as 1, 2, ..., 6, wherein the kinematics forward solution $P_5$ of the five-axis robot is equal to $A_1 \times A_2 \times A_3 \times A_4 \times A_5 \times A_t$, and the kinematics forward solution $P_6$ of the six-axis robot is equal to $A_1 \times A_2 \times A_3 \times A_4 \times A_5 \times A_6 \times A_t$;

a kinematics inverse solution obtaining module, used for correspondingly obtaining kinematics inverse solution equations of the five-axis robot and the six-axis robot according to the kinematics forward solutions of the five-axis robot and the six-axis robot respectively, and obtaining respective kinematics inverse solution according to the kinematics inverse solution equations of the five-axis robot and the six-axis robot;

wherein, the kinematics inverse solution equation of the five-axis robot is

$$\begin{cases} A_1^{-1} \times P_5 \times A_t^{-1} = A_2 \times A_3 \times A_4 \times A_5 \\ A_3^{-1} \times A_2^{-1} \times A_1^{-1} \times P_5 \times A_t^{-1} = A_4 \times A_5 \end{cases} ; \text{ and}$$

the kinematics inverse solution equation of the six-axis robot is

$$\begin{cases} A_1^{-1} \times P_6 \times A_t^{-1} \times A_6^{-1} = A_2 \times A_3 \times A_4 \times A_5 \\ A_3^{-1} \times A_2^{-1} \times A_1^{-1} \times P_6 \times A_t^{-1} \times A_6^{-1} = A_4 \times A_5 \end{cases} ; \text{ and}$$

an unique solution determining module, used for determining a respective unique solution from a plurality of kinematics inverse solutions of the five-axis robot and the six-axis robot respectively, wherein the unique solution corresponding to the five-axis robot is the motion target position of each joint shaft of the five-axis robot, and the unique solution corresponding to the six-axis robot is the motion target position of each joint shaft of the six-axis robot.

**Patentansprüche**

1. Fünf-Achsen- und Sechs-Achsen-Mischsteuerverfahren für einen Industrieroboter, wobei der Industrieroboter eine erste, zweite, dritte, vierte, fünfte und sechste Gelenkwelle und mehrere Stangen umfasst; wobei die Stangen mittels der ersten, zweiten, dritten, vierten, fünften und sechsten Gelenkwelle in Reihe geschaltet sind; wobei das Mischsteuerverfahren die folgenden Schritte umfasst:

   Schritt 1: Installieren eines Endeffektors (1, 2) an jedem Ende der fünften Gelenkwelle und der sechsten Gelenkwelle; Einstellen der ersten, zweiten, dritten, vierten und fünften Gelenkwelle sowie der Stäbe, die über die erste, zweite, dritte, vierte und fünfte Gelenkwelle in Reihe geschaltet sind, um einen fünfachsigen Roboter zu bilden, und gleichzeitiges Einstellen der ersten, zweiten, dritten, vierten, fünften und sechsten Gelenkwelle und der Stäbe, die über die erste, zweite, dritte, vierte, fünfte und sechste Gelenkwelle in Reihe verbunden sind, um einen sechsachsigen Roboter zu bilden;
   Schritt 2: Konfigurieren von Kanälen des fünfachsigen Roboters bzw. des sechsachsigen Roboters, wobei der fünfachsige Roboter einem ersten Kanal entspricht und der sechsachsige Roboter einem zweiten Kanal entspricht;
   Schritt 3: Erhalten der Bewegungszielposition jeder Gelenkwelle des fünfachsigen Roboters und des sechsachsigen Roboters; und
   Schritt 4: Gemäß der erhaltenen Bewegungszielposition jeder Gelenkwelle des fünfachsigen Roboters und des sechsachsigen Roboters wird der erste Kanal implementiert, um die Bewegung jeder Gelenkwelle des Fünf-Achs-Roboters zu steuern, und der zweite Kanal wird implementiert, um die Bewegung jeder Gelenkwelle des sechsachsigen Roboters zu steuern;
   wobei jede Gelenkwelle des Fünfachsenroboters und jede Gelenkwelle des Sechsachsenroboters die unabhängige Bewegung gemäß der Steuerung des ersten Kanals und des zweiten Kanals in unterschiedlichen Zeiträumen implementiert.

2. Fünf-Achsen- und Sechs-Achsen-Mischsteuerverfahren für einen Industrieroboter nach Anspruch 1, wobei Schritt 3 die folgenden Schritte umfasst:

   Schritt 31: entsprechend der Größe jeder Pleuelstange des Industrieroboters und des aktuellen Bewegungszustands jeder Gelenkwelle wird eine D-H-Parameterliste erstellt, wobei die D-H-Parameterliste einen Drehwinkel $\theta_1$ der i-ten Gelenkwelle, einen Achsabstand $a_i$ zwischen der i-ten Gelenkwelle und der benachbarten (i-1)-ten Gelenkwelle, einen Abstand $d_i$ entlang einer Achsenrichtung zwischen der i-ten Gelenkwelle und der (i-1)-ten Gelenkwelle und einen eingeschlossenen Winkel $\alpha_i$ zwischen der Achse der i-ten Gelenkwelle und der Achse der benachbarten (i-1)-ten Gelenkwelle aufweist, wobei der eingeschlossene Winkel ein Winkel ist, welcher von dem i-ten Gelenkwellenkoordinatensystem relativ zum (i-1)-ten Gelenkwellenkoordinatensystem um die X-Achse rotiert wird, wobei i mit 1, 2, ..., 6 bewertet wird;

Schritt 32: Gemäß der D-H-Parameterliste wird eine i-te Gelenkwellen-Transformationsmatrix

$$A_i = \begin{vmatrix} \cos\theta_i & -\sin\theta_i\cos\alpha_i & \sin\theta_i\sin\alpha_i & \alpha_i\cos\theta_i \\ \sin\theta_i & \cos\theta_i\sin\alpha_i & -\cos\theta_i\sin\alpha_i & \alpha_i \\ 0 & \sin\alpha_i & \cos\alpha_i & d_i \\ 0 & 0 & 0 & 1 \end{vmatrix}$$

erzeugt, wobei $\theta_i$ ein Drehwinkel der i-ten Gelenkwelle, $a_i$ ein Achsenabstand zwischen der i-ten Gelenkwelle und der benachbarten (i - 1)-ten Gelenkwelle, $d_i$ ein Abstand zwischen der i-ten Gelenkwelle und der benachbarten (i - 1)-ten Gelenkwelle entlang einer Achsenrichtung und $\alpha_i$ ein eingeschlossener Winkel zwischen einer Achse der i-ten Gelenkwelle und derjenigen der benachbarten (i -1)-iten Gelenkwelle sind, wobei i mit 1, 2,.... 6 bewertet wird;

Schritt 33: Entsprechend der Größe der Endeffektoren, welche an jedem Ende der fünften Gelenkwelle und der sechsten Gelenkwelle installiert sind, wird eine entsprechende Endeffektortransformationsmatrix $A_t$ erzeugt;

Schritt 34: Erhalten von kinematischen Vorwärtslösungen des fünfachsigen Roboters und des sechsachsigen Roboters mittels der i-ten Gelenkwellen-Transformationsmatrix $A_i$ bzw. der Endeffektortransformationsmatrix $A_t$, wobei i als 1, 2, ..., 6 bewertet wird;

wobei die kinematische Vorwärtslösung $P_5$ des Fünfachsenroboters gleich $A_1 \times A_2 \times A_3 \times A_4 \times A_5 \times A_t$ ist und die kinematische Vorwärtslösung $P_6$ des sechsachsigen Roboters gleich $A_1 \times A_2 \times A_3 \times A_4 \times A_5 \times A_6 \times A_t$ ist;

Schritt 35: entsprechendes Ermitteln kinematischer inverser Lösungsgleichungen des fünfachsigen Roboters und des sechsachsigen Roboters gemäß den kinematischen Vorwärtslösungen des fünfachsigen Roboters bzw. des sechsachsigen Roboters und Ermitteln der entsprechenden inversen Kinematiklösungen gemäß inverser Lösungsgleichungen der Kinematik des Fünf-Achs-Roboters und des Sechs-Achs-Roboters;

wobei die kinematische inverse Lösungsgleichung des fünfachsigen Roboters gilt:

$$\begin{cases} A_1^{-1} \, x \, P_5 \, x \, A_t^{-1} = A_2 \, x \, A_3 \, x \, A_4 \, x \, A_5 \\ A_2^{-1} \, x \, A_2^{-1} x \, A_t^{-1} \, x \, P_5 \, x \, A_t^{-1} = A_4 \, x \, A_5 \end{cases}; \text{ und}$$

wobei die kinematische inverse Lösungsgleichung des sechsachsigen Roboters gilt:

$$\begin{cases} A_1^{-1} \, x \, P_6 \, x \, A_t^{-1} \, x \, A_6^{-1} = A_2 \, x \, A_3 \, x \, A_4 \, x \, A_5 \\ A_3^{-1} \, x \, A_2^{-1} \, x \, A_t^{-1} x \, P_6 \, x \, A_t^{-1} \, x \, A_6^{-1} = A_4 \, x \, A_5 \end{cases}; \text{ und}$$

Schritt 36: Bestimmen einer jeweiligen eindeutigen Lösung aus einer Vielzahl von inversen Kinematiklösungen des fünfachsigen Roboters bzw. des sechsachsigen Roboters, wobei die eindeutige Lösung, die dem fünfachsigen Roboter entspricht, die Bewegungszielposition jeder Gelenkwelle des fünfachsigen Roboters, und die eindeutige Lösung, dem sechsachsigen Roboter entspricht, die Bewegungszielposition jeder Gelenkwelle des sechsachsigen Roboters ist.

3.  Fünf-Achsen- und Sechs-Achsen-Mischsteuerverfahren für einen Industrieroboter nach Anspruch 2, wobei vor Schritt 3 die folgenden Schritte vorgesehen sind:
    Konfigurieren eines Codierers und einer Datenbusschnittstelle für jede Gelenkwelle des Industrieroboters; wobei der Codierer zum Erfassen des aktuellen Bewegungszustands jeder Gelenkwelle verwendet wird und der aktuelle Bewegungszustand von der Datenbusschnittstelle übertragen wird.

4.  Fünf-Achsen- und Sechs-Achsen-Mischsteuerverfahren für einen Industrieroboter nach Anspruch 2, wobei die jeweilige eindeutige Lösung aus einer Vielzahl von inversen Kinematiklösungen des Fünfachsenroboters bzw. des Sechsachsroboters mittels des kürzesten Wegverfahrens bestimmt wird.

5.  Fünfachsiges und sechsachsiges Mischsteuersystem für einen Industrieroboter, welcher eine erste, zweite, dritte, vierte, fünfte und sechste Gelenkwelle und eine Vielzahl von Stangen umfasst; die Stangen sind über die erste, zweite, dritte, vierte, fünfte und sechste Gelenkwelle in Reihe geschaltet; wobei ein Endeffektor (1, 2) an jedem Ende der fünften Gelenkwelle und der sechsten Gelenkwelle installiert ist; und

das Steuersystem einen ersten Kanal und einen zweiten Kanal umfasst, die miteinander kommunizieren: sowohl der erste Kanal als auch der zweite Kanal umfassen:

eine Kanalkonfigurationseinheit, die zum Konfigurieren von Kanälen eines Fünf-Achs-Roboters und eines Sechs-Achs-Roboters verwendet wird, wobei der fünfachsige Roboter dem ersten Kanal entspricht und der sechsachsige Roboter dem zweiten Kanal entspricht; Einstellen der ersten, zweiten, dritten, vierten und fünften Gelenkwelle sowie der Stäbe, die über die erste, zweite, dritte, vierte und fünfte Gelenkwelle in Reihe geschaltet sind, um den fünfachsigen Roboter zu bilden, und gleichzeitiges Einstellen der der erste, zweiten, dritten, vierten, fünften und sechsten Gelenkwelle sowie der Stäbe, die über die erste, zweite, dritte, vierte, fünfte und sechste Gelenkwelle in Reihe verbunden sind, um den sechsachsigen Roboter auszubilden;

eine Zielpositionserlangungseinheit, die zum Erhalten der Bewegungszielposition jeder Gelenkwelle des Fünfachsenroboters bzw. des Sechsachsenroboters verwendet wird; und

eine Steuereinheit, die gemäß der ermittelten Bewegungszielposition jeder Gelenkwelle des Fünfachsenroboters und des Sechsachsenroboters verwendet wird, die Bewegungssteuerung jeder Gelenkwelle des Fünfachsenroboters zu realisieren oder die Bewegungssteuerung jeder Gelenkwelle des sechsachsigen Roboters zu realisieren.

6. Fünfachsiges und sechsachsiges Mischsteuersystem für einen Industrieroboter nach Anspruch 6, wobei die Zielpositionserlangungseinheit umfasst:

ein D-H-Parameterlisten-Erzeugungsmodul, das zum Erzeugen einer D-H-Parameterliste entsprechend der Größe jeder Pleuelstange des Industrieroboters verwendet wird und des aktuellen Bewegungszustands jeder Gelenkwelle, wobei die D-H-Parameterliste einen Drehwinkel $\theta_1$ der i-ten Gelenkwelle, einen Achsabstand $a_i$ zwischen der i-ten Gelenkwelle und der benachbarten (i -1)-ten Gelenkwelle, einen Abstand $d_i$ entlang einer Achsenrichtung zwischen der i-ten Gelenkwelle und der (i-1)-ten Gelenkwelle und einen eingeschlossenen Winkel $\alpha_i$ zwischen der Achse der i-ten Gelenkwelle und der Achse der benachbarten (i-1)-ten Gelenkwelle aufweist, wobei der eingeschlossene Winkel ein Winkel ist, welcher von dem i-ten Gelenkwellenkoordinatensystem relativ zum (i-1)-ten Gelenkwellenkoordinatensystem um die X-Achse rotiert wird, wobei i mit 1, 2, ..., 6 bewertet wird;

ein Gelenkwellen-Transformationsmatrix-Erzeugungsmodul, das zum Erzeugen einer i-ten Gelenkwellen-

$$\text{Transformationsmatrix } A_i = \begin{vmatrix} \cos\theta_i & -\sin\theta_i\cos\alpha_i & \sin\theta_i\sin\alpha_i & \alpha_i\cos\theta_i \\ \sin\theta_i & \cos\theta_i\sin\alpha_i & -\cos\theta_i\sin\alpha_i & \alpha_i \\ 0 & \sin\alpha_i & \cos\alpha_i & d_i \\ 0 & 0 & 0 & 1 \end{vmatrix} \text{ entsprechend der D-H-}$$

Parameterliste verwendet wird, wobei $\theta_i$ ein Drehwinkel der i-ten Gelenkwelle, $a_i$ ein Achsenabstand zwischen der i-ten Gelenkwelle und der benachbarten (i - 1)-ten Gelenkwelle, $d_i$ ein Abstand zwischen der i-ten Gelenkwelle und der benachbarten (i - 1)-ten Gelenkwelle entlang einer Achsenrichtung und $\alpha_i$ ein eingeschlossener Winkel zwischen einer Achse der i-ten Gelenkwelle und derjenigen der benachbarten (i -1)-iten Gelenkwelle sind, wobei i mit 1, 2,.... 6 bewertet wird;

ein Endeffektor-Transformationsmatrix-Erzeugungsmodul, welches verwendet wird, eine eine entsprechende Endeffektortransformationsmatrix $A_t$ entsprechend der Größe der Endeffektoren zu erzeugen, welche an jedem Ende der fünften Gelenkwelle und der sechsten Gelenkwelle installiert sind;

ein kinematisches Vorwärtslösungs-Ermittlungsmodul, welches zur Ermittlung von kinematischen Vorwärtslösungen des fünfachsigen Roboters und des sechsachsigen Roboters mittels der i-ten Gelenkwellen-Transfor-mationsmatrix $A_i$ bzw. der Endeffektortransformationsmatrix $A_t$ verwendet wird, wobei i als 1, 2, ..., 6 bewertet wird; wobei die kinematische Vorwärtslösung $P_5$ des Fünfachsenroboters gleich $A_1 \times A_2 \times A_3 \times A_4 \times A_5 \times A_t$ ist und die kinematische Vorwärtslösung $P_6$ des sechsachsigen Roboters gleich $A_1 \times A_2 \times A_3 \times A_4 \times A_5 \times A_6 \times A_t$ ist;

ein kinematisches Inverslösungs-Ermittlungsmodul, welches zum entsprechenden Ermitteln kinematischer inverser Lösungsgleichungen des fünfachsigen Roboters und des sechsachsigen Roboters gemäß den kinematischen Vorwärtslösungen des fünfachsigen Roboters bzw. des sechsachsigen Roboters und zum Ermitteln der entsprechenden inversen Kinematiklösungen gemäß inverser Lösungsgleichungen der Kinematik des Fünf-Achs-Roboters und des Sechs-Achs-Roboters verwendet wird;

wobei die kinematische inverse Lösungsgleichung des fünfachsigen Roboters gilt:

$$\begin{cases} A_1^{-1}\ x\ P_5\ x\ A_t^{-1} = A_2\ x\ A_3\ x\ A_4\ x\ A_5 \\ A_2^{-1}\ x\ A_2^{-1}x\ A_t^{-1}\ x\ P_5\ x\ A_t^{-1}\ =\ A_4\ x\ A_5 \end{cases}; \text{ und}$$

wobei die kinematische inverse Lösungsgleichung des sechsachsigen Roboters gilt:

$$\begin{cases} A_1^{-1}\ x\ P_6\ x\ A_t^{-1}\ x\ A_6^{-1} = A_2\ x\ A_3\ x\ A_4\ x\ A_5 \\ A_3^{-1}\ x\ A_2^{-1}x\ A_t^{-1}x\ P_6\ x\ A_t^{-1}\ x\ A_6^{-1}\ =\ A_4\ x\ A_5 \end{cases}; \text{ und}$$

ein Module zur eindeutigen Lösungsbestimmung, welches zur Bestimmung einer jeweiligen eindeutigen Lösung aus einer Vielzahl von inversen Kinematiklösungen des fünfachsigen Roboters bzw. des sechsachsigen Roboters verwendet wird, wobei die eindeutige Lösung, die dem fünfachsigen Roboter entspricht, die Bewegungszielposition jeder Gelenkwelle des fünfachsigen Roboters, und die eindeutige Lösung, dem sechsachsigen Roboter entspricht, die Bewegungszielposition jeder Gelenkwelle des sechsachsigen Roboters sind.

## Revendications

1. Procédé de commande de mélange à cinq axes et à six axes, destiné à un robot industriel, le robot industriel comporte un premier, un deuxième, un troisième, un quatrième, un cinquième et un sixième arbre d'articulation et une pluralité de tiges ; les tiges sont raccordées en série par les premier, deuxième, troisième, quatrième, cinquième et sixième arbre d'articulation ; dans lequel le procédé de commande comporte les étapes suivantes :

étape 1 : installation d'un organe effecteur terminal (1,2) sur chaque extrémité du cinquième arbre d'articulation et du sixième arbre d'articulation ; réglage du premier, deuxième, troisième, quatrième et cinquième arbre d'articulation et des tiges raccordées en série par le premier, le deuxième, le troisième, le quatrième et le cinquième arbre d'articulation pour former un robot à cinq axes et réglage simultanément du premier, deuxième, troisième, quatrième et cinquième arbre d'articulation et des tiges raccordées en série par le premier, le deuxième, le troisième, le quatrième et le cinquième arbre d'articulation pour former un robot à six axes ;
étape 2 : configuration des canaux du robot à cinq axes et du robot à six axes respectivement, dans laquelle le robot à cinq axes correspond à un premier canal et le robot à six axes correspondant à un deuxième canal ;
étape 3 : obtention respectivement de la position cible de mouvement de chaque arbre d'articulation du robot à cinq axes et du robot à six axes ; et
étape 4 : selon la position cible de mouvement obtenue de chaque arbre d'articulation du robot à cinq axes et du robot à six axes, le premier canal est mis en oeuvre pour commander le mouvement de chaque arbre d'articulation du robot à cinq axes et le deuxième canal est mis en oeuvre pour commander le mouvement de chaque arbre d'articulation du robot à six axes ;
dans laquelle chaque arbre d'articulation du robot à cinq axes et chaque arbre d'articulation du robot à six axes mettent en oeuvre un mouvement indépendant selon la commande du premier canal et du deuxième canal à différentes périodes respectivement.

2. Procédé de commande de mélange à cinq axes et à six axes, destiné à un robot industriel selon la revendication 1, dans lequel l'étape 3 comporte précisément les étapes suivantes :

étape 31 : selon la taille de chaque tige de raccordement du robot industriel et l'état de mouvement actuel de chaque arbre d'articulation, une liste des paramètres D-H est générée ; la liste des paramètres D-H comprend un angle de rotation $\theta_i$ du $i$ème arbre d'articulation, un entraxe $a_i$ entre le $i$ème arbre d'articulation et le $(i$-1)ème arbre d'articulation adjacent, une distance $d_i$ le long d'une direction de l'axe entre le $i$ème arbre d'articulation et le $(i$-1)ème arbre d'articulation et un angle inclus $\alpha_i$ entre le $i$ème axe de l'arbre d'articulation et le $(i$-1)ème arbre d'articulation adjacent, l'angle inclus étant un angle tourné par le système de coordonnées du $i$ème arbre d'articulation par rapport au système de coordonnées du $(i$-1)ème arbre d'articulation autour de l'axe X, dans laquelle $i$ est évalué comme 1, 2, ..., 6 ;
étape 32 : selon la liste des paramètres D-H, une matrice de transformation du $i$ème arbre d'articulation

$$A_i = \begin{vmatrix} \cos\theta_i & -\sin\theta_i\cos\alpha_i & \sin\theta_i\sin\alpha_i & \alpha_i\cos\theta_i \\ \sin\theta_i & \cos\theta_i\cos\alpha_i & -\cos\theta_i\sin\alpha_i & \alpha_i \\ 0 & \sin\alpha_i & \cos\alpha_i & d_i \\ 0 & 0 & 0 & 1 \end{vmatrix}$$ est générée, dans laquelle $\theta_i$ est un angle

de rotation du $i^{ème}$ arbre d'articulation, est $\alpha_i$ un entraxe entre le $i^{ème}$ arbre d'articulation et le $(i\text{-}1)^{ème}$ arbre d'articulation adjacent, $d_i$ est une distance entre le $i^{ème}$ arbre d'articulation et le $(i\text{-}1)^{ème}$ arbre d'articulation adjacent le long d'un axe de direction, et $\alpha_i$ est un angle inclus entre un axe du $i^{ème}$ arbre d'articulation et celui du $(i\text{-}1)^{ème}$ arbre d'articulation adjacent, dans laquelle $i$ est évalué comme 1, 2, ..., 6 ;

étape 33 : selon la taille de chacun des organes effecteurs terminaux installés sur chaque extrémité du 5$^{ème}$ arbre d'articulation et du 6$^{ème}$ arbre d'articulation, une matrice de transformation de l'organe effecteur terminal correspondant $A_t$ est générée ; $A_t$

étape 34 : obtention des solutions de cinématique directe du robot à cinq axes et du robot à six axes par l'intermédiaire de la matrice de transformation du $i^{ème}$ arbre d'articulation $A_i$ et de la matrice de transformation de l'organe effecteur terminal $A_t$ respectivement, dans laquelle $i$ est évalué comme 1, 2, ..., 6 ;

dans lequel, la solution de cinématique directe $P_5$ du robot à cinq axes est égale à $A_1 \times A_2 \times A_3 \times A_4 \times A_5 \times A_t$ et la solution de cinématique directe $P_6$ du robot à six axes est égale à $A_1 \times A_2 \times A_3 \times A_4 \times A_5 \times A_6 \times A_t$

étape 35 : obtention de manière correspondante des équations de la solution de cinématique inverse du robot à cinq axes et du robot à six axes selon les solutions de cinématique directe du robot à cinq axes et du robot à six axes respectivement et l'obtention de la solution de cinématique inverse selon les équations de la solution de cinématique inverse du robot à cinq axes et du robot à six axes ;

dans laquelle, l'équation de la solution de cinématique inverse du robot à cinq axes est

$$\begin{cases} A_1^{-1} \times P_5 \times A_t^{-1} = A_2 \times A_3 \times A_4 \times A_5 \\ A_3^{-1} \times A_2^{-1} \times A_1^{-1} \times P_5 \times A_t^{-1} = A_4 \times A_5 \end{cases} ;\ \text{et}$$

l'équation de la solution de cinématique inverse du robot à six axes est

$$\begin{cases} A_1^{-1} \times P_6 \times A_t^{-1} \times A_6^{-1} = A_2 \times A_3 \times A_4 \times A_5 \\ A_3^{-1} \times A_2^{-1} \times A_1^{-1} \times P_6 \times A_t^{-1} \times A_6^{-1} = A_4 \times A_5 \end{cases} ;\ \text{et}$$

étape 36 : la détermination d'une solution unique respective à partir d'une pluralité des solutions de cinématique inverse du robot à cinq axes et du robot à six axes respectivement, la solution unique correspondant au robot à cinq axes étant la position cible de mouvement de chaque arbre d'articulation du robot à cinq axes et la solution unique correspondant au robot à six axes étant la position cible de mouvement de chaque arbre d'articulation du robot à six axes.

3. Procédé de commande de mélange à cinq axes et à six axes, destiné à un robot industriel selon la revendication 2, dans lequel avant l'étape 3, il existe les étapes comme suit :

la configuration d'un encodeur et une interface de bus de données pour chaque arbre d'articulation du robot industriel respectivement ; l'encodeur étant utilisé pour la détection de l'état de mouvement actuel de chaque arbre d'articulation et l'état de mouvement actuel est transmis par l'interface du bus de données.

4. Procédé de commande de mélange à cinq axes et à six axes, destiné à un robot industriel selon la revendication 2, dans lequel :

la solution unique respective est déterminée à partir d'une pluralité des solutions de cinématique inverse du robot à cinq axes et du robot à six axes par la méthode du plus court chemin respectivement.

5. Système de commande de mélange à cinq axes et à six axes, destiné à un robot industriel, le robot industriel comporte un premier, un deuxième, un troisième, un quatrième, un cinquième et un sixième arbre d'articulation et une pluralité de tiges ; les tiges sont raccordées en série par les premier, deuxième, troisième, quatrième, cinquième et sixième arbre d'articulation ; dans lequel un organe effecteur terminal (1, 2) est installé sur chaque extrémité du cinquième arbre d'articulation et du sixième arbre d'articulation ; et le système de commande comporte un premier canal et un deuxième canal qui communiquent l'un avec l'autre :

à la fois le premier canal et la deuxième canal comprennent :

une unité de configuration de canal, utilisée pour configurer les canaux d'un robot à cinq axes et d'un robot à six axes respectivement, le robot à cinq axes correspondant à un premier canal et le robot à six axes correspondant à un deuxième canal ; le réglage du premier, deuxième, troisième, quatrième et cinquième arbre d'articulation et des tiges raccordées en série par le premier, le deuxième, le troisième, le quatrième et le cinquième arbre d'articulation pour former le robot à cinq axes et le réglage simultanément du premier, deuxième, troisième, quatrième et cinquième arbre d'articulation et des tiges raccordées en série par le premier, le deuxième, le troisième, le quatrième, le cinquième arbre et le sixième arbre d'articulation pour former le robot à six axes ; une unité d'obtention de la position cible utilisée pour obtenir respectivement la position cible de mouvement de chaque arbre d'articulation du robot à cinq axes et du robot à six axes ; et une unité de commande utilisée pour, selon la position cible de mouvement obtenue de chaque arbre d'articulation du robot à cinq axes et du robot à six axes, réaliser la commande de mouvement de chaque arbre d'articulation du robot à cinq axes et réaliser la commande de mouvement de chaque arbre d'articulation du robot à six axes ;

dans laquelle chaque arbre d'articulation du robot à cinq axes et chaque arbre d'articulation du robot à six axes est apte à mettre en oeuvre un mouvement indépendant selon la commande du premier canal et du deuxième canal à différentes périodes respectivement ; et

dans laquelle le premier canal et le deuxième canal sont configurés pour commander le robot à cinq axes et le robot à six axes respectivement.

6. Système de commande de mélange à cinq axes et à six axes, destiné à un robot industriel selon la revendication 5, dans lequel l'unité de position cible comprend :

un module de génération de la liste des paramètres D-H utilisé pour générer une liste des paramètres D-H selon la taille de chaque tige de raccordement du robot industriel et l'état de mouvement actuel de chaque arbre d'articulation, la liste des paramètres D-H comprenant un angle de rotation $\theta_i$ du $i^{\text{ème}}$ arbre d'articulation, un entraxe $\alpha_i$ entre le $i^{\text{ème}}$ arbre d'articulation et le $(i\text{-}1)^{\text{ème}}$ arbre d'articulation adjacent, une distance $d_i$ le long d'une direction de l'axe entre le $i^{\text{ème}}$ arbre d'articulation et le $(i\text{-}1)^{\text{ème}}$ arbre d'articulation et un angle inclus $\alpha_i$ entre le $i^{\text{ème}}$ axe de l'arbre d'articulation et le $(i\text{-}1)^{\text{ème}}$ arbre d'articulation adjacent, l'angle inclus étant un angle tourné par le système de coordonnées du $i^{\text{ème}}$ arbre d'articulation par rapport au système de coordonnées du $(i\text{-}1)^{\text{ème}}$ arbre d'articulation autour de l'axe X, dans laquelle $i$ est évalué comme 1, 2, ..., 6 ;

un module de génération de la matrice de transformation de l'arbre d'articulation, utilisée pour générer une matrice de transformation du $i^{\text{ème}}$ arbre d'articulation

$$A_i = \begin{vmatrix} \cos\theta_i & -\sin\theta_i\cos\alpha_i & \sin\theta_i\sin\alpha_i & \alpha_i\cos\theta_i \\ \sin\theta_i & \cos\theta_i\cos\alpha_i & -\cos\theta_i\sin\alpha_i & \alpha_i \\ 0 & \sin\alpha_i & \cos\alpha_i & d_i \\ 0 & 0 & 0 & 1 \end{vmatrix}$$ selon la liste des paramètres D-H, dans la-

quelle $\theta_i$ est un angle de rotation du $i^{\text{ème}}$ arbre d'articulation, $\alpha_i$ est un entraxe entre le $i^{\text{ème}}$ arbre d'articulation et le $(i\text{-}1)^{\text{ème}}$ arbre d'articulation adjacent, $d_i$ est une distance entre le $i^{\text{ème}}$ arbre d'articulation et le $(i\text{-}1)^{\text{ème}}$ arbre d'articulation adjacent, le long d'une direction de l'axe et $\alpha_i$ est un angle inclus entre un axe du $i^{\text{ème}}$ arbre d'articulation et du $(i\text{-}1)^{\text{ème}}$ arbre d'articulation adjacent, dans laquelle $i$ est évalué comme 1, 2, ..., 6 ; un module de génération de la matrice de transformation de l'organe effecteur terminal, utilisé pour générer une matrice de transformation de l'organe effecteur terminal correspondant $A_t$ selon la taille de chacun des organes effecteurs terminaux installés sur chaque extrémité du 5$^{\text{ème}}$ arbre d'articulation et du 6$^{\text{ème}}$ arbre d'articulation ;

un module d'obtention de la solution de cinématique directe, utilisé pour obtenir les solutions de cinématique directe du robot à cinq axes et du robot à six axes par l'intermédiaire de la matrice de transformation du $i^{\text{ème}}$ arbre d'articulation $A_i$ et de la matrice de transformation de l'organe effecteur terminal $A_t$ respectivement, dans lequel $i$ est évalué comme 1, 2, ..., 6, dans lequel la solution de cinématique directe $P_5$ du robot à cinq axes est égale à $A_1{\times}A_2{\times}A_3{\times}A_4{\times}A_5{\times}A_t$ et la solution de cinématique directe $P_6$ du robot à six axes est égale à $A_1{\times}A_2{\times}A_3{\times}A_4{\times}A_5{\times}A_6{\times}A_t$ ;

un module d'obtention de la solution de cinématique inverse, utilisé pour obtenir de manière correspondante les équations de la solution de cinématique inverse et du robot à cinq axes et du robot à six axes selon les solutions de cinématique directe du robot à cinq axes et du robot à six axes respectivement et l'obtention de la solution de cinématique inverse selon les équations de la solution de cinématique inverse du robot à cinq axes et du robot à six axes ;

dans laquelle, l'équation de la solution de cinématique inverse du robot à cinq axes est

$$\begin{cases} A_1{}^{-1}{\times}P_5{\times}A_t{}^{-1} = A_2{\times}A_3{\times}A_4{\times}A_5 \\ A_3{}^{-1}{\times}A_2{}^{-1}{\times}A_1{}^{-1}{\times}P_5{\times}A_t{}^{-1} = A_4{\times}A_5 \end{cases} \text{ ; et}$$

l'équation de la solution de cinématique inverse du robot à six axes est

$$\begin{cases} A_1^{-1} \times P_6 \times A_t^{-1} \times A_6^{-1} = A_2 \times A_3 \times A_4 \times A_5 \\ A_3^{-1} \times A_2^{-1} \times A_1^{-1} \times P_6 \times A_t^{-1} \times A_6^{-1} = A_4 \times A_5 \end{cases} \text{; et}$$

un module de détermination de la solution unique, utilisé pour déterminer une solution unique respective à partir d'une pluralité de solutions de cinématique inverse du robot à cinq axes et du robot à six axes respectivement, la solution unique correspondant au robot à cinq axes étant la position cible de mouvement de chaque arbre d'articulation du robot à cinq axes et la solution unique correspondant au robot à six axes étant la position cible de mouvement de chaque arbre d'articulation du robot à six axes.

$$\begin{cases} A_1^{-1} \times P_6 \times A_t^{-1} \times A_6^{-1} = A_2 \times A_3 \times A_4 \times A_5 \\ A_3^{-1} \times A_2^{-1} \times A_1^{-1} \times P_6 \times A_t^{-1} \times A_6^{-1} = A_4 \times A_5 \end{cases}$$

1

Installing an end effector on each end of the fifth joint shaft and the sixth joint shaft; set the first, the second, the third, the fourth and the fifth joint shaft, and a plurality of rods connected in series by the first, the second, the third, the fourth and the fifth joint shaft form a five-axis robot, and simultaneously setting the first, the second, the third, the fourth, the fifth and the sixth joint shaft, and a plurality of rods connected in series by the first, the second, the third, the fourth, the fifth and the sixth joint shaft form a six-axis robot;

2

Configuring respectively the channel of the five-axis robot and the six-axis robot, wherein the five-axis robot corresponding to the first channel, and the six-axis robot corresponding to the second channel;

3

Obtaining the motion target position of each joint shaft of the five-axis robot and six-axis robot respectively;

4

According to the obtained motion target position of each joint shaft of the five-axis robot and the six-axis robot, the first channel is implemented to control the movement of each joint shaft of the five-axis robot, and the second channel is implemented to control the movement of each joint shaft of the six-shaft robot.

Fig. 1

According to the size of each connecting rod of the industrial robot and the current motion state of each joint shaft, a D-H parameter list is generated; / 31

According to the D-H parameter list, a $i^{th}$ joint shaft transformation matrix $A_i$ is generated; / 32

According to the size of the end effecotr, a corresponding end effector transformation matrix $A_i$ is generated; / 33

Obtaining kinematics forward solutions of the five-axis robot and the six-axis robot through the $i^{th}$ joint shaft transformation matrix $A_i$ and the end effector transformation matrix $A_t$ respectively; / 34

Correspondingly obtaining kinematics inverse solution equations of the five-axis robot and the six-axis robot according to the kinematics forward solutions of the five-axis robot and the six-axis robot respectively, and obtaining respective kinematics inverse solution according to the kinematics inverse solution equations of the kinematics inverse solution equations of the five-axis robot and the six-axis robot; / 35

Determining a respective unique solution from a plurality of kinematics inverse solutions of the five-axis robot and the six-axis robot respectively, wherein the unique solution corresponding to the five-axis robot is the motion target position of each joint shaft of the five-axis robot, and the unique solution corresponding to the six-axis robot is the motion target position of each joint shaft of the six-axis robot. / 36

Fig. 2

## First channel

Channel configuring unit

↓

**Target position obtaining unit**

D-H parameter list generating module

↓

| Joint shaft transformation matrix generating module | End effector transformation matrix generating module |

↓

Kinematics forward solution obtaining module

↓

Kinematics inverse solution obtaining module

↓

Unique solution determining module

↓

Control unit

↓

Five-axis robot

## Second channel

Channel configuring unit

↓

**Target position obtaining unit**

D-H parameter list generating module

↓

| Joint shaft transformation matrix generating module | End effector transformation matrix generating module |

↓

Kinematics forward solution obtaining module

↓

Kinematics inverse solution obtaining module

↓

Unique solution determining module

↓

Control unit

↓

Six-axis robot

Fig. 3

Fig. 4

EP 3 175 958 B1

Fig. 5

Fig. 6

Fig. 7

**EP 3 175 958 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11179682 A